# EUROPÄISCHE PATENTSCHRIFT

(11) **EP 0 634 638 B1**
(45) Veröffentlichungstag und Bekanntmachung des Hinweises auf die Patenterteilung: **25.03.1998**
(21) Anmeldenummer: 94109949.1
(22) Anmeldetag: 28.06.1994
(51) Int. Cl.: G01L 5/28, G01L 25/00, G01M 17/007

(54) **Justiereinrichtung für einen Rollenprüfstand**
Adjustment device for a roller test bench
Dispositif d'ajustement pour banc d'essai à rouleaux

(30) Priorität: 17.07.1993 DE 4323999
(43) Veröffentlichungstag der Anmeldung: 18.01.1995
(73) Patentinhaber: ROBERT BOSCH GMBH, 70442 Stuttgart (DE)
(72) Erfinder: Hauck, Franz, Ing.(grad.), D-73770 Denkendorf (DE)

(56) Entgegenhaltungen:
- EP-A- 0 522 329
- DE-A- 3 331 708
- PATENT ABSTRACTS OF JAPAN vol. 14, no. 128 (P-1019) 26. Dezember 1989 & JP-A-01 320 444 (KISHIMOTO SHOJI) 9. März 1990
- PATENT ABSTRACTS OF JAPAN vol. 15, no. 338 (P-1243) 29. Mai 1991 & JP-A-03 125 938 (FUJIMORI SADAO) 27. August 1991

## Beschreibung

### Stand der Technik

Die Erfindung geht aus von einer Justiereinrichtung für einen Rollenprüfstand zur Bremsen- und/oder Leistungsprüfung bei Kraftfahrzeugen.

Aus der DE 30 43 155 A1 sowie aus dem Kraftfahrtechnischen Taschenbuch von BOSCH, 20. Aufl., 1986, Seiten 536, 537 sind Rollenprüfstände bekannt, bei denen die Bestimmung einer Bremskraft durch Messung eines Reaktionsmomentes erfolgt. Bei diesen Rollenprüfständen ist mindestens ein Rollenpaar in einem Gehäuserahmen gelagert, wobei deren Antriebsrolle von einem Elektromotor über ein Getriebe antreibbar ist. Diese Antriebseinheit aus Motor und Getriebe ist auf einer Welle der Antriebsrolle pendelnd gelagert und stützt sich über einen am Getriebe befestigten Drehmomenthebel über einen Meßwertgeber am Gehäuserahmen ab. Solche Rollenprüfstände, die als Bremsen- und/oder Leistungsprüfstände an Kraftfahrzeugen verwendet werden, müssen nach bestehenden Richtlinien überprüft werden, um die Genauigkeit der Bremskraftanzeige des Rollenprüfstandes zu kontrollieren. Zur Überprüfung der Genauigkeit der Bremskraftanzeige von Brems- und Leistungsprüfständen wurde bisher in der Praxis eine Justiervorrichtung verwendet, die mit einem Eichhebel mit mehreren Belastungsgewichten arbeitet. Dabei wird der Eich- oder Justierhebel zusätzlich zum vorhandenen Drehmomenthebel am Gehäuse des Getriebes befestigt und ist mit einer unterschiedlichen Anzahl von Eichgewichten belastbar, wobei die vorgegebene Last mit der gemessenen, angezeigten Last vergleichbar ist. Je nach Bauart des Rollenprüfstandes konnte dabei der Justierhebel eine Länge über zwei Meter und die Gewichte in der Summe bis ca. 300 kg betragen. Obwohl mit dieser Justiereinrichtung die Bremskraftanzeige mit ausreichender Genauigkeit überprüft werden konnte, war doch das Handling dieser Justiereinrichtung relativ aufwendig und auch nicht ungefährlich. Zudem mußten die schweren Gewichte vom Kundendienstfahrzeug mitgeführt werden und führten zudem zu hoher körperlicher Belastung der Bedienungsperson. Zudem erforderten die Justierarbeiten mit dieser Einrichtung relativ viel Zeit.

Ferner ist eine auf dem Markt befindliche Justiereinrichtung für Rollenprüfstände bekannt, bei der auf einer am Gehäuserahmen des Rollenprüfstandes etwa mittig zwischen beiden Rollen stehend befestigten Strebe ein Hebelarm mit Gewichtschale gelagert ist, der über ein Tariergewicht ausgewogen und über eine Libelle waagrecht einstellbar ist und der über einen relativ langen Druckbolzen sich auf dem Drehmomenthebel des Rollenprüfstandes abstützt. Auch hier treten vergleichbare Nachteile wie bei der zuvor geschilderten Justiereinrichtung auf, insbesondere erfordert diese Justiereinrichtung eine aufwendige, unfallgefährdete Handhabung und läßt keine schnelle Justage zu.

### Vorteile der Erfindung

Die erfindungsgemäße Justiereinrichtung für einen Rollenprüfstand zur Bremsen- und/oder Leistungsprüfung von Kraftfahrzeugen mit den kennzeichnenden Merkmalen des Hauptanspruchs hat demgegenüber den Vorteil, daß sie eine Überprüfung der Genauigkeit der Bremskraftanzeige von Rollenprüfständen ermöglicht, wobei ein wesentlich besseres und gefahrloseres Handling möglich ist. Zudem läßt sich die Justage genauer und schneller durchführen. Die Justiereinrichtung kommt mit wesentlich weniger Aufwand aus, wobei vor allem ihr Gewicht im Vergleich zu früheren Justiereinrichtungen erheblich reduziert ist und insbesondere nur noch den zwanzigsten bis dreißigsten Teil betragen kann. Zudem ist die Justiereinrichtung universell einsetzbar. Ferner baut sie relativ einfach, platzsparend und kostengünstig.

Durch die in den Unteransprüchen aufgeführten Maßnahmen sind vorteilhafte Weiterbildungen und Verbesserungen der im Hauptanspruch angegebenen Justiereinrichtung möglich. So läßt sich eine besonders einfache, kostengünstige und leicht handhabbare Bauweise erreichen, wenn der Adapter gemäß Anspruch 2 plattenförmig ausgebildet wird. Äußerst vorteilhaft ist es ferner, wenn die Wägezelle mit Dehnmeßstreifen arbeitet und mit ihrer Hilfe die Scherkräfte ermittelt werden, wodurch eine besonders genaue Arbeitsweise begünstigt wird. Ein besonders einfaches und gutes Handling ergibt sich bei einer Ausbildung des Druckelements als einfache Druckschraube, wobei bei einer Ausbildung nach Anspruch 6 zusätzlich die Genauigkeit unterstützt wird, indem mit Hilfe einer Kugelabstützung die Reibung gesenkt wird. Weitere Verbesserungen bei der Handhabung der Justiereinrichtung lassen sich gemäß den Ausbildungen nach Anspruch 7 bis 9 erreichen. Weitere vorteilhafte Ausgestaltungen ergeben sich aus der Beschreibung und der Zeichnung.

### Zeichnung

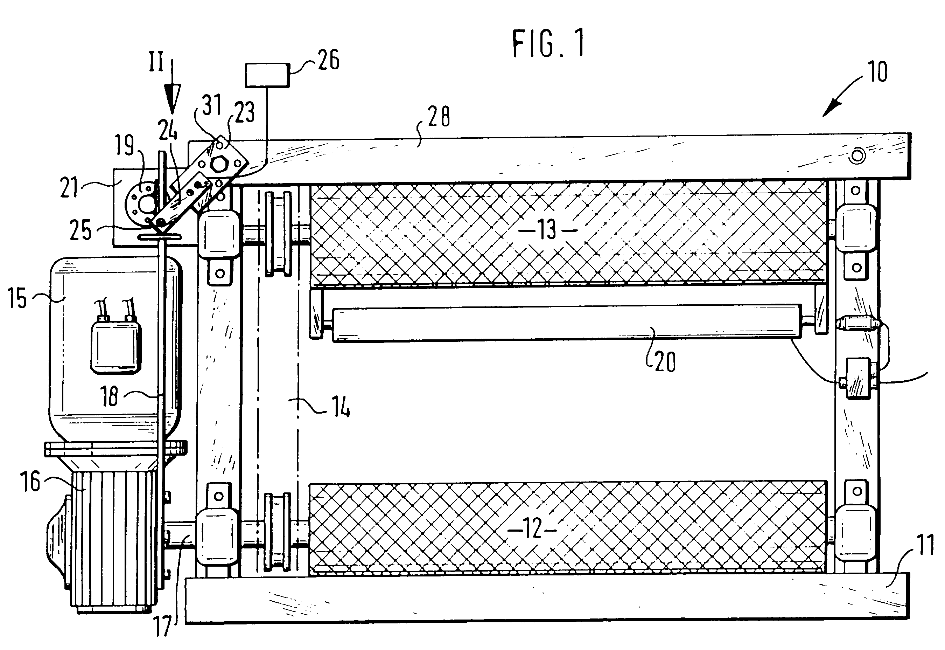

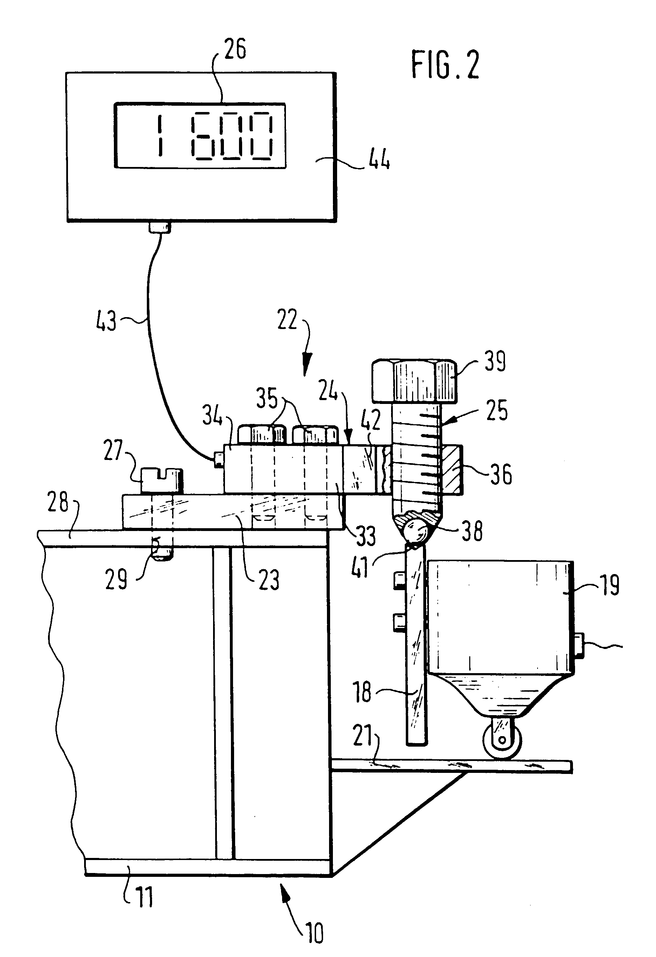

Ein Ausführungseispiel der Erfindung ist in der Zeichnung dargestellt und in der nachfolgenden Beschreibung näher erläutert. Es zeigen Figur 1 eine Draufsicht auf einen Teil eines Rollenprüfstandes mit einer montierten, erfindungsgemäßen Justiereinrichtung in vereinfachter Darstellung und Figur 2 eine Ansicht der Justiereinrichtung nach Pfeil II in Figur 1 in vergrößertem Maßstab und in vereinfachter Darstellung.

### Beschreibung des Ausführungsbeispiels

Die Figur 1 zeigt als Teil eines Rollenprüfstandes 10 dessen linken Rollensatz, bei dem in einem stabilen Gehäuserahmen 11 eine Antriebsrolle 12 und eine dazu parallel angeordnete Auflaufrolle 13 gelagert sind. Beide Rollen 12, 13 sind über einen Kettenantrieb 14 formschlüssig miteinander verbunden. Die Antriebsrolle 12 wird von einem Elektromotor 15 über ein Getriebe 16 angetrieben, wobei diese aus Motor und Getriebe gebildete Antriebseinheit 15, 16 pendelnd auf einer verlängerten Welle 17 der Antriebsrolle 12 gelagert ist. Ferner ist am Getriebe 16 ein Drehmomenthebel 18 befestigt, an dessen freiem Ende ein Meßwertgeber 19 fest angeordnet ist, über welchen sich die Antriebseinheit mit dem Drehmomenthebel 18 auf einer gehäusefest angeordneten Konsole 21 abstützen kann. Ferner ist im Gehäuserahmen 11 eine zusätzliche Tastrolle 20 angeordnet.

Dieser grundsätzliche Aufbau des Rollenprüfstandes 10 ist an sich bekannt, ebenso wie dessen Wirkungsweise, wobei die Messung der Bremskraft auf der Messung des Reaktionsmomentes beruht, wozu im einzelnen auf die eingangs erwähnten Druckschriften hingewiesen wird.

Wie Figur 1 ferner in vereinfachter Weise zeigt, ist auf dem Gehäuserahmen 11 in der Nähe des Meßwertgebers 19 die eigentliche Justiereinrichtung 22 angeordnet. Wie die Figur 1 in Verbindung mit Figur 2 näher zeigt, in welcher die Justiereinrichtung 22 in vergrößertem Maßstab und vereinfacht dargestellt ist, besteht sie im wesentlichen aus einem plattenförmig ausgebildeten Adapter 23, einer Wägezelle 24, einem in der Wägezelle 24 befestigten Druckelement, das hier als Druckschraube 25 ausgebildet ist, und einer mit der Wägezelle 24 verbundenen Meßanzeige 26.

Der plattenförmig ausgebildete Adapter 23 ist über eine Feststellschraube 27 lösbar und verschwenkbar auf der Oberseite einer Strebe 28 des Gehäuserahmens 11 befestigt. Dabei ist es vorteilhaft, wenn für die Feststellschraube 27 das in der Strebe 28 ohnedies vorhandene Transportloch 29 zum Befestigen verwendet wird. Die Adapterplatte 23 weist ferner mehrere Bohrungen 31 bzw. Öffnungen oder Schlitze auf, so daß die Adapterplatte 23 in zahlreichen Montagestellungen am Gehäuserahmen 11 befestigbar ist.

Auf der Oberseite der Adapterplatte 23 ist eine elektrisch arbeitende Wägezelle 24 montiert, deren quaderförmiges, stabförmiges Gehäuse 33 an seinem einen Ende 34 mit Hilfe zweier Schrauben 35 auf der Adapterplatte 23 befestigt ist, während das Gehäuse 33 mit seinem anderen, freien Ende 36 in Richtung des Meßwertgebers 19 ragt und dabei den Drehmomenthebel 18 überstreckt. Am freien Ende des Gehäuses 33 der Wägezelle 24 ist eine als Druckelement dienende Druckschraube 25 angeordnet, welche relativ groß und stabil ausgebildet ist und das Gehäuse 33 durchdringt. Die mit ihrer Längsachse senkrecht zur Adapterplatte 23 angeordnete Druckschraube weist an ihrem unten aus dem Gehäuse 33 herausragenden Ende eine Kugelabstützung 38 auf, während am entgegengesetzten Ende ein zum Verstellen dienender Sechskant 39 angeordnet ist. Mit der Kugelabstützung 38 stützt sich die Druckschraube 25 in einem Belastungspunkt 41 am Drehmomenthebel 18 ab. Der Belastungspunkt 41 kann dabei in zweckmäßiger Weise als kleine V-förmige Kerbe im Drehmomenthebel 18 gekennzeichnet sein, wobei dessen Abstand von der Welle 17 je nach Bauart des Rollenprüfstands 10 das fünf- bis siebenfache vom Radius der Antriebsrolle 12 betragen kann, so daß genaue Hebelverhältnisse am Rollenprüfstand 10 festgelegt sind. Die Wägezelle 24 weist an ihren beiden Seitenflächen des quaderförmigen Gehäuses 33 im Bereich zwischen seinen beiden Enden 34, 36 zwei Dehnmeßstreifen 42 auf, deren Signale über ein Anschlußkabel 43 an eine Meßanzeigevorrichtung 44 weitergeleitet wird, in welcher auch der zugehörige Meßverstärker und die elektrische Versorgung untergebracht sind.

Die Wirkungsweise der Justiereinrichtung 22 wird wie folgt beschrieben, wobei die Funktion des Rollenprüfstandes 10 als an sich bekannt vorausgesetzt wird.

Zur Überprüfung der Genauigkeit der Bremskraftanzeige des Rollenprüfstandes 10 wird die Justiereinrichtung 22 mit Hilfe der Adapterplatte 23 auf der Strebe 28 des Gehäuserahmens 11 so montiert, daß die Wägezelle 24 in Draufsicht gesehen mit ihrem freien Ende 36 den Drehmomenthebel 18 überragt. Dabei wird die Adapterplatte 23 auf der Strebe 28 so ausgerichtet, daß die Druckschraube 25 mit ihrer Kugelabstützung 38 genau im gekennzeichneten Belastungspunkt 41 des Drehmomenthebels 18 anliegt. Dies läßt sich einfach und schnell durchführen, wonach die Adapterplatte 23 mit Hilfe der Feststellschraube 27 in dem ohnedies vorhandenen Transportloch 29 an der Strebe 28 befestigt wird. Über die Schrauben 35 ist eine weitere Verschwenkbarkeit und somit Verstellbarkeit der Wägezelle 32 relativ zur Adapterplatte 23 gegeben. Die Druckschraube 37 befindet sich mit dem Drehmomenthebel 18 in der gleichen lotrechten Ebene und steht im wesentlichen senkrecht auf ihm. Durch Verstellen der Druckschraube 25 können nun verschieden große Kräfte auf den Drehmomenthebel 18 ausgeübt werden. Die Größe dieser Kräfte wird in der Wägezelle 24 mit Hilfe der Dehnmeßstreifen 42 ermittelt und deren Signale über das Kabel 43 der Meßanzeigevorrichtung 44 zugeführt, wo sie angezeigt werden. Die Dehnmeßstreifen 42 ermitteln dabei die im Gehäuse 33 wirksamen Scherkräfte, wodurch eine genaue und unbeeinflußte Messung der Kräfte möglich ist. Die auf den Drehmomenthebel 18 ausgeübte Kraft wird auch vom angebauten Meßwertgeber 19 erfaßt, der entsprechende Signale an eine nicht näher gezeichnete Bremskraftanzeige gibt. Die Werte an der Meßanzeigevorrichtung 44 können nun mit denjenigen an der nicht näher gezeigten Bremskraftanzeige verglichen werden, so daß eine Überprüfung der Genauigkeit und eine Justierung der Bremskraftanzeige möglich ist. Die Meßanzeigevorrichtung 44 läßt sich dabei so im Raum stationieren, daß für die Bedienungsperson eine leichte Überprüfung möglich ist.

Mit der Justiereinrichtung 22 ist somit beim Überprüfen der Bremskraftanzeigegenauigkeit von Brems- und Leistungsprüfständen eine wesentlich einfachere und gefahrlosere Handhabung möglich, zumal sie im Vergleich zu früheren Justiereinrichtungen mit Eichhebel und Gewichten ein wesentlich reduziertes Gesamtgewicht aufweist, das in der Größenordnung von ca. 10 kg liegen kann. Mit der Justiereinrichtung 22 ist nicht nur eine schnellere Justage des Rollenprüfstandes 10 möglich, sondern es wird auch die Genauigkeit beträchtlich erhöht. So läßt sich anstelle der bisher mit Gewichten erzielten Genauigkeit von 0,2% mit der Justiereinrichtung 22 eine Genauigkeit von ca. 0,1% erreichen, wozu vor allem die Scherkraftmessung in der Wägezelle 24 beiträgt. Nach der Überprüfung läßt sich die Justiereinrichtung 22 relativ leicht und schnell von der Strebe 28 des linken Rollensatzes demontieren und kann zur Überprüfung des anderen, rechten Rollensatzes vom Rollenprüfstand 10 an dessen Gehäuserahmen befestigt werden.

Selbstverständlich sind an dem gezeigten Ausführungsbeispiel Änderungen möglich, ohne von der beanspruchten Erfindung abzuweichen. So ist die Ausbildung des Adapters 23 nicht auf eine plattenförmige Bauweise begrenzt. Auch läßt sich die Druckschraube 25 als handbetätigbare Spindel mit entsprechendem Hebelarm ausbilden. Anstelle der Kugelabstützung 38 können auch andere reibungsarme Abstützelemente verwendet werden. Obwohl die Wägezelle 24, welche mittels Dehnmeßstreifen die Scherkräfte ermittelt, besonders vorteilhaft ist, können auch andere geeignete Meßprinzipien in der Wägezelle Anwendung finden.

## Patentansprüche

1. Justiereinrichtung für einen Rollenprüfstand zur Bremsen- und/oder Leistungsprüfung von Kraftfahrzeugen, bei welchem Rollenprüfstand mindestens ein Rollenpaar (12,13) in einem Gehäuserahmen (11) gelagert und deren Antriebsrolle (12) von einem Elektromotor (15) über ein Getriebe (16) antreibbar ist, wobei Motor und Getriebe auf einer Welle (17) der Antriebsrolle pendelnd gelagert sind und sich über einen am Getriebe befestigten Drehmomenthebel (18) über einen Meßwertgeber (19) am Gehäuserahmen abstützen, dadurch gekennzeichnet, daß die Justiereinrichtung (22) einen Adapter (23) aufweist, mit dem sie im Bereich des Meßwertgebers (19) am Gehäuserahmen (11) des Rollenprüfstandes (10) befestigbar ist, daß auf dem Adapter (23) eine elektrische Wägezelle (24) angeordnet ist, deren Gehäuse (33) mit ihrem einen Ende (34) auf dem Adapter (23) befestigbar ist, während am anderen, über den Adapter hinausragenden freien Gehäuse-Ende (36) ein verstellbares Druckelement (25) angeordnet ist, das im eingebauten Zustand mit einem Belastungspunkt (41) am Drehmomenthebel (18) zusammenwirkt und daß die Wägezelle (24) mit einer Meßanzeige (44) in Wirkverbindung steht.

2. Justiereinrichtung nach Anspruch 1, dadurch gekennzeichnet, daß der Adapter (23) plattenförmig ausgebildet ist und zu seiner Befestigung dienende, insbesondere mehrere Bohrungen (31) bzw. Durchbrüche aufweist.

3. Justiereinrichtung nach Anspruch 1 oder 2, dadurch gekennzeichnet, daß die Wägezelle (24) mit Dehnmeßstreifen (42) arbeitet.

4. Justiereinrichtung nach Anspruch 3, dadurch gekennzeichnet, daß das quaderförmige Gehäuse (33) der Wägezelle (24) stabförmig ausgebildet ist und an seinen beiden Seitenflächen zwischen den beiden Enden (34, 36) die Dehnmeßstreifen (42) zur Ermittlung der Scherkräfte angeordnet sind.

5. Justiereinrichtung nach einem oder mehreren der Ansprüche 1 bis 4, dadurch gekennzeichnet, daß das Druckelement als Druckschraube (25) ausgebildet ist, deren Längsachse im wesentlichen lotrecht, insbesondere senkrecht zur Adapterplatte (23) verläuft.

6. Justiereinrichtung nach einem der Ansprüche 1 bis 5, dadurch gekennzeichnet, daß das Druckelement (25) an seinem dem Drehmomenthebel (18) zugewandten Ende eine Kugelabstützung (38) aufweist.

7. Justiereinrichtung nach einem der Ansprüche 1 bis 6, dadurch gekennzeichnet, daß der Adapter (23) zur Aufnahme einer Feststellschraube (27) ausgebildet ist, die an einem Transportloch (29) am Gehäuserahmen (11) des Rollenprüfstandes (10) befestigbar ist.

8. Justiereinrichtung nach einem der Ansprüche 1 bis 7, dadurch gekennzeichnet, daß die Wägezelle (24) über ein Kabel (43) an eine elektrische Meßanzeigevorrichtung (44) angeschlossen ist, die einen von der Wägezelle (24) getrennten Baukörper bildet.

9. Justiereinrichtung nach einem der Ansprüche 1 bis 8, dadurch gekennzeichnet, daß im eingebauten Zustand der Belastungspunkt (41) am Drehmomenthebel (18) in einem Abstand von der Welle (17) der Antriebsrolle (12) angeordnet ist, der dem fünf- bis siebenfachen des Rollenhalbmessers entspricht.

10. Justiereinrichtung nach einem oder mehreren der Ansprüche 1 bis 9, dadurch gekennzeichnet, daß die Wägezelle (24) am Adapter (23) relativ zu ihm verschwenkbar und von ihm lösbar angeordnet ist, insbesondere mittels einer Schraubverbindung (35).

## Claims

1. Adjusting device for a roller-type test stand for testing the brakes and/or the power of motor vehicles, in which roller-type test stand at least one pair of rollers (12, 13) is mounted in a housing frame (11) and the driving roller (12) of which can be driven by an electric motor (15) via a gear (16), the motor and gear being pendulously mounted on a shaft (17) of the driving roller and being supported on the housing frame, via a measurement transducer (19), by means of a torque lever (18) fastened to the gear, characterized in that the adjusting device (22) has an adaptor (23), by means of which it can be fastened to the housing frame (11) of the roller-type test stand (10) in the region of the measurement transducer (19), in that the adaptor (23) has arranged on it an electrical weighing cell (24), the housing of which (33) can be fastened at one end (34) to the adaptor (23), whilst an adjustable pressure element (25) is arranged at the other free housing end (36) projecting beyond the adaptor, the said pressure element cooperating, in the installed state, with a load point (41) on the torque lever (18), and in that the weighing cell (24) is operatively connected to a measurement indicator (44).

2. Adjusting device according to Claim 1, characterized in that the adaptor (23) is of a plate-shaped design and has, in particular, a plurality of bores (31) or perforations which serve for fastening it.

3. Adjusting device according to Claim 1 or 2, characterized in that the weighing cell (24) works with strain gauges (42).

4. Adjusting device according to Claim 3, characterized in that the parallelepipedic housing (33) of the weighing cell (24) is of bar-shaped design and the strain gauges (42) determining the shearing forces are arranged on the two side faces of the said housing between the two ends (34, 36).

5. Adjusting device according to one or more of Claims 1 to 4, characterized in that the pressure element is designed as a pressure screw (25), the longitudinal axis of which runs essentially vertically, in particular perpendicularly to the adaptor plate (23).

6. Adjusting device according to one of Claims 1 to 5, characterized in that the pressure element (25) has a bowl support (38) at its end facing the torque lever (18).

7. Adjusting device according to one of Claims 1 to 6, characterized in that the adaptor (23) is designed for receiving a locking screw (27) which can be fastened to the housing frame (11) of the roller-type test stand (10) at a transport hole (29).

8. Adjusting device according to one of Claims 1 to 7, characterized in that the weighing cell (24) is connected via a cable (43) to an electrical measurement indicator device (44) which forms a structural member separate from the weighing cell (24).

9. Adjusting device according to one of Claims 1 to 8, characterized in that, in the installed state, the load point (41) on the torque lever (18) is arranged at a distance from the shaft (17) of the driving roller (12) which corresponds to five to seven times the roller radius.

10. Adjusting device according to one or more of Claims 1 to 9, characterized in that the weighing cell (24) is arranged on the adaptor (23) so as to be pivotable relative to it and releasable from it, in particular by means of a screw connection (35).

## Revendications

1. Dispositif d'ajustage pour un banc d'essai à rouleaux servant à vérifier le freinage et/ou la puissance de véhicules à moteur, banc d'essai à rouleaux dans lequel on monte au moins une paire de rouleaux (12, 12) dans un bâti de carter (11) et dont les rouleaux d'entraînement (12) peuvent être entraînés par un moteur électrique (15) par l'intermédiaire d'une boîte de transmission (16), le moteur et la boîte de transmission étant montés de façon oscillante sur un arbre (17) du rouleau d'entraînement et prenant appui au moyen d'un levier de couple (18), fixé sur la boîte de transmission, sur un capteur de forces (19) sur le bâti du carter,
caractérisé en ce que
• le dispositif d'ajustage (22) présente un adaptateur (23), avec lequel il peut être fixé dans la région du capteur de forces (19) sur le bâti du carter (11) du banc d'essai à rouleaux (10),
• l'on dispose sur l'adaptateur (23) une cellule électrique de balance(24), dont le boîtier (33) peut être fixé par l'une de ses extrémités (34) sur l'adaptateur (23), tandis qu'à l'autre extrémité libre du carter (36) faisant saillie sur l'adaptateur, on dispose un élément de compression réglable (25) qui, en position montée coopère avec un point de chargement (41) sur le levier de couple (18) et
• la cellule de balance (24) est en liaison opérationnelle avec un indicateur de mesure (44).

2. Dispositif d'ajustage selon la revendication 1,
caractérisé en ce que
l'adaptateur (23) est constitué sous la forme d'une plaque et présente en particulier plusieurs alésages (31) ou ajours qui servent à sa fixation.

3. Dispositif d'ajustage selon la revendication 1 ou 2,
caractérisé en ce que
la cellule de balance (24) fonctionne avec des bandes de mesure d'allongement (42).

4. Dispositif d'ajustage selon la revendication 3,
caractérisé en ce que
• le boîtier (33), de forme carrée, de la cellule de balance (24) est constitué en forme de bâton et
• sur ses deux faces latérales sont disposés entre les deux extrémités (34, 36) les bandes de mesure d'allongement (42) servant à déterminer les forces de cisaillement.

5. Dispositif d'ajustage selon une ou plusieurs des revendications 1 à 4,
caractérisé en ce que
l'élément de compression est constitué sous la forme d'une vis de serrage (25), dont l'axe longitudinal s'étend verticalement, en particulier perpendiculairement à la plaque de l'adaptateur (23).

6. Dispositif d'ajustage selon l'une des revendications 1 à 5,
caractérisé en ce que
l'élément de compression (25) présente à son extrémité tournée vers le levier de couple (18) un appui sphérique (38).

7. Dispositif d'ajustage selon l'une des revendications 1 à 6,
caractérisé en ce que
l'adaptateur (23) est constitué pour recevoir une vis de blocage (27), qui peut être fixée sur un trou de transport (29) sur le bâti (11) du carter du banc d'essai à rouleaux (10).

8. Dispositif d'ajustage selon l'une des revendications 1 à 7,
caractérisé en ce que
la cellule de la balance (24) est raccordée par un câble (43) à un dispositif électrique indicateur de mesure (44), qui forme un corps de montage séparé de la cellule de la balance (24).

9. Dispositif d'ajustage selon l'une des revendications 1 à 8,
caractérisé en ce que
en position montée le point de chargement (41) est disposé sur le levier de couple (18) à une distance de l'arbre (17) du rouleau d'entraînement (12), qui correspond à cinq à sept fois le rayon du rouleau.

10. Dispositif d'ajustage selon une ou plusieurs des revendications 1 à 9,
caractérisé en ce que
la cellule de la balance (24) est disposée sur l'adaptateur (23) de façon à pouvoir pivoter par rapport à lui et se détacher de lui, en particulier au moyen d'une liaison par vis (35).
